# EUROPÄISCHE PATENTANMELDUNG

(11) **EP 1 092 851 A2**
(43) Veröffentlichungstag der Anmeldung: **18.04.2001**
(21) Anmeldenummer: 00122115.9
(22) Anmeldetag: 12.10.2000
(51) Int. Cl.: F02B 75/02

(54) **Verbrennungsmotor sowie Verfahren zum Betreiben einer Verbrennungskraftmaschine**

(30) Priorität: 13.10.1999 AT 173099
(71) Anmelder: Winkler, Ulrike, A-6850 Dornbirn (AT)
(72) Erfinder: Nagel, Edmund Ferdinand, 6800 Feldkirch (AT)
(74) Vertreter: Hefel, Herbert, Dipl.-Ing.

(57) **Zusammenfassung**

Bei einem Verbrennungsmotor mit einer oder mehreren Brennkammern zur Verbrennung eines Treibstoffes in getakteten Explosionen unter Bildung eines unter Druck stehenden Verbrennungsgases sind die Brennkammern (1, 1') mit mindestens einer von den Brennkammern (1, 1') gesonderten Arbeitskammer (3) verbunden, welche einen Kolben (4) zur Umsetzung von Energie des in einem Explosionstakt gebildeten Verbrennungsgases in mechanische Energie bzw. Arbeit aufweist. Zumindest eine in die Arbeitskammer (3) mündende Einspritzdüse (26) zum Einsprühen einer Kühlflüssigkeit zur Einleitung eines an den Explosionstakt anschließenden Implosionstaktes und eine oder mehrere durch die Bewegung des Kolbens (4) während des Implosionstaktes angetriebene Vorverdichtungspumpen (36, 36') zum Verdichten von in die Brennkammern (1, 1') einzubringender Luft sind vorgesehen.

## Beschreibung

Die Erfindung betrifft einen Verbrennungsmotor mit einer oder mehreren Brennkammern zur Verbrennung eines Treibstoffes in getakteten Explosionen unter Bildung eines unter Druck stehenden Verbrennungsgases.

Verbrennungsmotoren sind Verbrennungskraftmaschinen, die durch einen periodischen bzw. getakteten Ablauf der einzelnen Explosionen gekennzeichnet sind, im Gegensatz zu einem kontinuierlichen Ablauf, wie er beispielsweise in einer Gasturbine stattfindet. Üblicherweise wird bei einem Verbrennungsmotor ein Brennstoff-Luftgemisch in einem Zylinder verbrannt und dadurch ein in diesem Zylinder gelagerter Kolben bewegt und die Energie des Verbrennungsgases in mechanische Energie umgewandelt. Solche bekannte Verbrennungsmotoren sind beispielsweise der Otto-Motor und der Dieselmotor.

Weiters sind Verbrennungsmotoren mit einer von der Brennkammer, in welcher der Treibstoff unter Bildung eines Verbrennungsgases getaktet verbrannt wird, getrennten Expansionskammer, die mit der Brennkammer über ein steuerbares Einlaßventil verbunden ist und in der ein Kolben verschiebbar gelagert ist, mittels dem Energie des Verbrennungsgases in mechanische Energie bzw. Arbeit umgesetzt wird, beispielsweise aus der EP 0 957 250 A2, der AT-PS 172 823, der CH-PS 202 930, der FR-PS 820 750, der DE-PS 4 136 223 und der US-PS 4,716,720 bekannt. Der Vorteil dieser Verbrennungsmotoren besteht insbesondere darin, daß sich das bei der Verbrennung gebildete Verbrennungsgas im Expansionstakt in der Expansionskammer vollständig entspannen kann, wodurch die Energie des Verbrennungsgases besser ausgenützt werden kann. Die Befüllung der Brennkammer mit Treibstoff-Luft-Gemisch kann bei Atmosphärendruck oder verdichtet erfolgen. Für die Verdichtung der Luft in der Brennkammer ist es bereits bekannt, eine eigene Verdichterpumpe zu verwenden, beispielsweise aus der DE-PS 4 136 223 und der US-PS 4,716,720.

Aus der DE-OS 32 14 516 ist weiters ein Verbrennungsmotor bekannt, bei dem das Treibstoff-Luftgemisch in einem ersten Zylinder verbrannt wird, wodurch ein in diesem Zylinder gelagerter Kolben bewegt wird, der einen Teil der mechanischen Arbeit leistet. Ein weiterer Teil der mechanischen Arbeit wird von einem in einem zweiten Zylinder gelagerten Kolben geleistet, in welchem der Restdruck des ersten Zylinders expandieren kann, wenn der im ersten Zylinder gelagerte Kolben seinen unteren Totpunkt erreicht hat. Zusätzlich ist ein dritter Zylinder mit einem darin gelagerten Kolben zur Vorkompression von Luft in den ersten Zylinder vorgesehen.

Aufgabe der Erfindung ist es, einen neuartigen Verbrennungsmotor bereitzustellen, der sich durch eine einfache Bauart und einen verbesserten Wirkungsgrad auszeichnet. Erfindungsgemäß gelingt dies durch die Merkmale des Anspruchs 1.

Beim erfindungsgemäßen Verbrennungsmotor wird somit anschließend an einen Explosionstakt ein Implosionstakt eingeleitet, indem eine Kühlflüssigkeit in die Arbeitskammer eingesprüht wird. Durch diese wird die Temperatur des heißen Verbrennungsgases schlagartig abgekühlt, wobei sich der Druck in der Arbeitskammer auf einen unter Atmosphärendruck liegenden Druck verringert. Dieser auf den Kolben wirkende Unterdruck wird zur Spülung der Brennkammer und zur Vorverdichtung von Luft in der Brennkammer herangezogen, indem eine oder mehrere Vorverdichtungspumpen vorgesehen sind, die durch die Bewegung des Kolbens während des Implosionstaktes angetrieben werden.

In einer bevorzugten Ausführungsform der Erfindung sind die Brennkammerwände derart thermisch isoliert, daß ihre Temperatur im Dauerbetrieb über der Selbstentzündungstemperatur des Treibstoffes liegt. Dazu kann eine die Brennkammer außen umgebende Wärmeisolierung vorgesehen sein oder die Brennkammer selbst aus einem schlecht wärmeleitenden Material, wie Keramik, ausgebildet sein. Eine Zündung bzw. ein Explosionstakt wird dann günstigerweise dadurch ausgelöst, daß Treibstoff in die Brennkammer und auf die Kammerwandungen eingespritzt wird. Um Wärmeabstrahlungsverluste weiter zu minimieren, sind günstigerweise auch der Kopf der Arbeitskammer (der Zylinderkopf) und der Kolben thermisch isoliert. Zur Verringerung der NOx-Emissionen ist bevorzugterweise weiters eine Einrichtung zur Einsprühung von Wasser in die Brennkammer während der Verbrennung des Treibstoffes vorgesehen.

Weitere Vorteile und Einzelheiten der Erfindung werden im folgenden anhand der beiliegenden Zeichnung erläutert. In dieser zeigen:

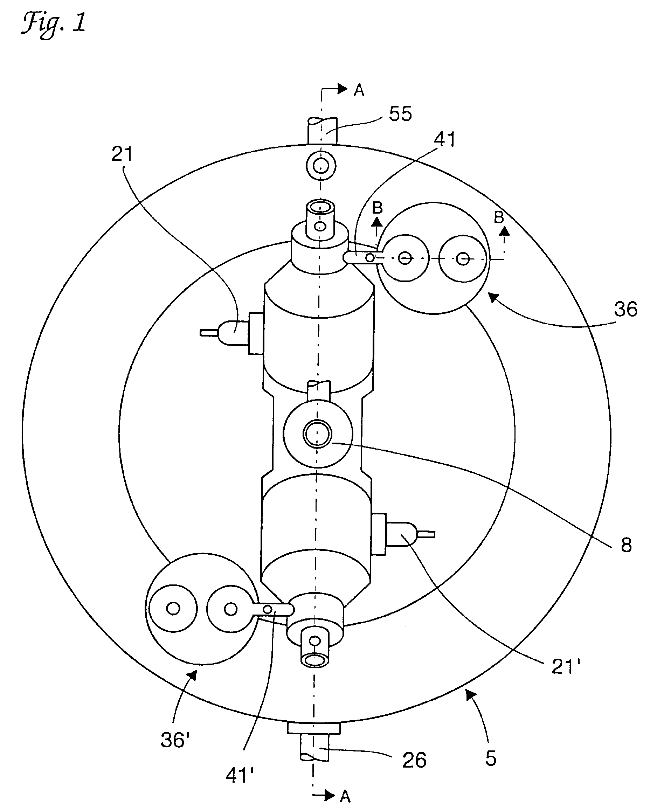

- Fig. 1: eine schematische Draufsicht auf einen erfindungsgemäßen Verbrennungsmotor;
- Fig. 2: einen Schnitt entlang der Linie A-A von Fig. 1 zusammen mit schematischen Darstellungen der Steuerung und des Hydraulikkreises des Motors und

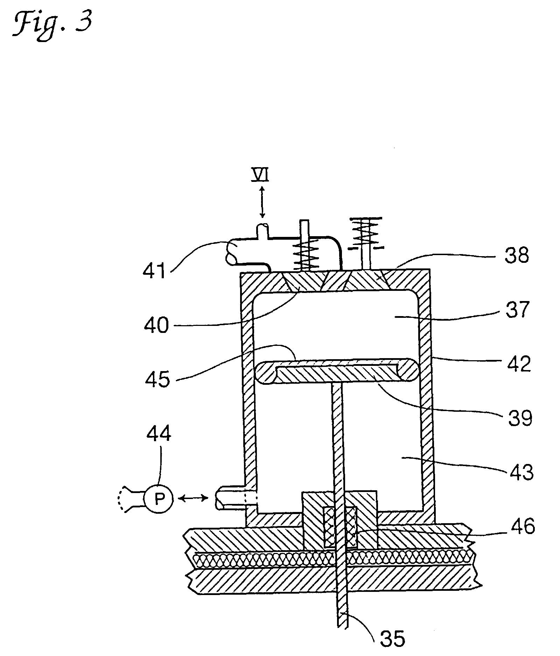

- Fig. 3: einen Schnitt entlang der Linie B-B von Fig. 1.

Das gezeigte Ausführungsbeispiel des erfindungsgemäßen Verbrennungsmotors weist V-förmig angeordnete Brennkammern 1, 1' auf, die über ein steuerbares Brennkammer-Auslaßventil 2 mit einer Arbeitskammer 3 verbunden sind, welche vom Zylinderraum einer einen Kolben 4 aufweisenden Kolben-Zylinder-Einheit 5 gebildet wird. Ein erfindungsgemäßer Verbrennungsmotor kann auch mehrere Arbeitskammern 3 aufweisen, die mit einer oder mehreren Brennkammern 1, 1' verbunden sind.

Das Auslaßventil 2 umfaßt einen Ventilteller 6 und einen Ventilschaft 7, der vorzugsweise aus keramischem Material besteht, um Wärmeverfrachtungen zu minimieren. Das freie Ende des Ventilschaftes 7 reicht in einen Zylinder 8 und weist im Bereich des freien Endes einen Bereich mit einem größeren Durchmesser auf, an welchem eine ringförmige Dichtungslippe 9 festgelegt ist. Im geschlossenen Zustand des Auslaßventils 2 liegt diese Dichtungslippe 9 auf einem ringförmigen Fortsatz 10 an der Innenseite der Wandung des Zylinders 8 auf. Der hydraulisch wirksame Durchmesser ist somit im geschlossenen Zustand des Auslaßventils 2 die vom ringförmigen Fortsatz 10 eingeschlossene Fläche, was zu einer hohen Schließkraft führt, während im geöffneten oder teilweise geöffneten Zustand des Auslaßventils 2 die Öffnungsfläche der den Ventilschaft 7 aufnehmenden Öffnung des Zylinders 8 maßgeblich ist, wodurch eine rasche Schließgeschwindigkeit bei einer geringen Menge an benötigter Hydraulikflüssigkeit erreicht wird. Eine Schraubenfeder 11, die sich an einem Flansch 12 am Ventilschaft 7 abstützt, spannt das Auslaßventil in der geöffneten Stellung vor. Diese Schraubenfeder 11 beaufschlagt weiters eine Stopfdichtung 13 zur Abdichtung des Ventilschaftes 7 gegenüber den Brennkammern 1, 1'.

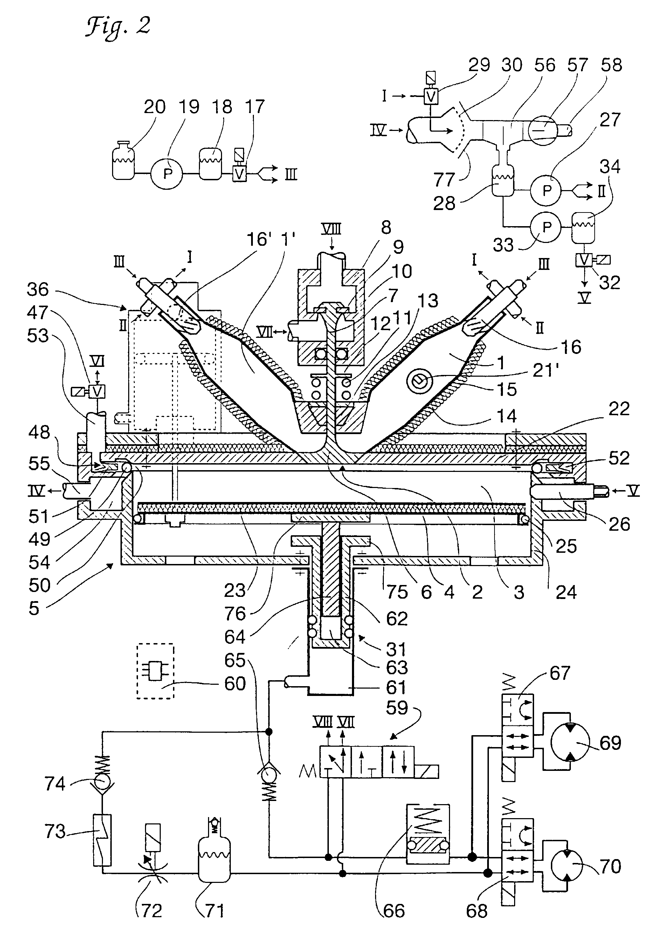

Die Steuerung des Auslaßventils erfolgt über das Brennerauslaß-Steuerventil 59, das mit dem später beschriebenen Hydraulik-Kreis in Verbindung steht, und zwar mit der Zulaufseite der Hydraulikmotoren 69, 70, welche einen relativ hohen Druck aufweist, sowie mit deren Rücklaufseite, welche einen relativ niedrigen Druck aufweist. Das Steuerventil 59 weist drei Stellungen auf. In der in der Fig. 2 gezeigten rechten Stellung sind beide Anschlüsse VII, VIII des Zylinders 8 auf niedrigen Druck gelegt, und das Auslaßventil 2 wird aufgrund der Vorspannung der Feder 11 geöffnet. In der mittleren Stellung des Steuerventils 59 wird das Auslaßventil geschlossen (Anschluß VIII hoher Druck, Anschluß VII geschlossen), und in der linken Stellung des Steuerventils 59 wird der hohe Schließdruck des Auslaßventils 2 aufgebracht, wobei auf den Anschluß VIII ein hoher Druck gelegt wird und der Anschluß VII auf niedrigen Druck gelegt wird.

Die Brennkammern 1, 1' sind mit einer Wärmeisolierung 14 umgeben, um eine Wärmeabstrahlung der Wände 15 der Brennkammern 1, 1' möglichst zu vermeiden. Die Wände 15 der Brennkammern 1, 1' heizen sich daher im Dauerbetrieb des Verbrennungsmotors auf sehr hohe Temperaturen auf, die oberhalb von 700 °C, vorzugsweise im Bereich bis oder oberhalb von 1200 °C liegen.

Der Treibstoff wird direkt in die Brennkammern 1, 1' eingespritzt. Dazu sind Doppeldüsen 16, 16' vorgesehen, die auch zur Einspritzung von Wasser dienen und deren Funktion weiter unten genauer erläutert ist. Die Sprühcharakteristik der Doppeldüsen 16, 16' ist für den Treibstoff breitfächernd ausgebildet, so daß die Wände 14 der Brennkammern 1, 1' beim Einspritzen von Treibstoff möglichst gut bzw. großflächig mit Treibstoff benetzt werden. Zur Steuerung der Treibstoffeinspritzung ist ein elektromagnetisches Schaltventil 17 vorgesehen, an das ein Druckspeicher 18 für Treibstoff in Form eines Windkessels angeschlossen ist, der von einer Treibstoffpumpe 19 beaufschlagt wird, welche ihrerseits Treibstoff aus einem Tank 20 fördert. Die Sollschaltzeit des elektromagnetischen Schaltventils 17 liegt im Bereich einer Millisekunde. Derartige elektromagnetische Schaltventile sind im Kraftfahrzeugbereich bekannt (beispielsweise K-Jettronic oder Common-Rail).

Für den Kaltstart des Verbrennungsmotors sind Zündkerzen 21, 21' vorgesehen. Sobald die Wände 15 der Brennkammern 1, 1' genügend erhitzt sind und Selbstzündung des eingespritzten Treibstoffes stattfindet (bei Temperaturen über ca. 600 °C), werden die Zündkerzen 21, 21' nicht mehr gezündet. Aufgrund der Selbstzündung des Treibstoffes wird dieser über die Einspritzdüsen erst in jenem Augenblick mit hohem Druck feinst zerstäubt und in die Brennkammer eingebracht, in welchem die Zündung stattfinden soll. Beim Auftreffen der einzelnen Treibstofftröpfchen entzünden sich diese an den Brennerwandungen mit Flammenherden um jedes einzelne Tröpfchen.

Aufgrund der durch die Vielfach-Oberflächenzündungen auftretenden Flammenherde um jedes einzelne Tröpfchen kommt es zu einem ausgeprägten "Klopfen" der Maschine, d. h. die Verbrennung läuft mit extremen Turbulenzen und mit hoher Geschwindigkeit. Im Gegensatz zu herkömmlichen Verbrennungsmotoren, wo dieser Effekt äußerst unerwünscht ist (Vermeidung durch Antiklopfmittel und beschränkte Verdichtungszahlen), ist diese Art der Verbrennung beim erfindungsgemäßen Motor sehr vorteilhaft, da insbesondere die Turbulenzen der Verbrennung mit Überschall-Gasverwirbelungen zu einer intensiven Vermischung des Gemisches während des Abbrandes führen. Dadurch sind bereits Luftzahlen um Lamda 1,05 zum annähernd CO- und HC-freien Abbrand möglich, wobei Werte weit unter dem Abgaswert eines Otto-Motors mit Katalysator erreicht werden können. Da beim Abbrand die druckbedingte Gasverfrachtung schneller ist als die Flammenlaufgeschwindigkeit, bleibt das Brennkammer-Auslaßventil 2 bis zur vollständigen Verbrennung des Gemisches verschlossen, da sonst unverbranntes Gemisch in die Arbeitskammer 3 gelangt und dort keine Zündung mehr erfährt.

Um thermische Verluste auch in der Kolben-Zylinder-Einheit 5 möglichst zu minimieren, erstreckt sich die Isolierung 14 auch über den Zylinderkopf 22. Zusätzlich ist der Kolben hier mit einer Isolierung 23 versehen. Lediglich die Zylinderwand 24 ist nicht thermisch isoliert, sondern vorteilhafterweise sogar mit Kühlrippen (in den Figuren nicht dargestellt) versehen, um eine zu hohe thermische Belastung der Kolbendichtung 25 zu vermeiden. Diese besteht aus Kunststoff, vorzugsweise aus Graphit-Teflon, welcher bis etwa 250 °C dauertemperaturbeständig ist. Diese Dichtung 25 ist wasserschmierbar, und eine oder mehrere entlang des Umfangs der Zylinderwand 24 (oder auf dem Zylinderkopf 22) angeordnete Kühlwasser-Einspritzdüsen, deren Funktion weiter unten genauer erläutert wird, bewirken eine zusätzliche Kühlung bzw. eine Schmierung der Kolbendichtung 25.

Zur Verringerung des NOx-Ausstoßes des Verbrennungsmotors ist eine Wassereinspritzung in die Brennkammern 1, 1' während des Explosionstaktes vorgesehen. Diese Wassereinspritzung erfolgt ebenfalls über die Doppeldüsen 16, 16'. Die Doppeldüsen 16, 16' weisen dazu jeweils eine zentrale innere Düse zur Einspritzung des Treibstoffes und eine diese innere Düse ringförmig umgebende äußere Düse zur Einspritzung von Wasser auf. Der Düsenmund der inneren Treibstoffdüse und der Düsenmund der Wasserdüse sind dabei im drucklosen Zustand geschlossen und öffnen erst bei einer Beaufschlagung dieser Düsen mit einem hohen Druck in einer Weise, wie dies bei den herkömmlichen Dieseldüsen bekannt ist. Die äußere Wasserdüse weist an ihrer Umfangswandung einen Wassereinlaß und einen gegenüberliegenden Wasserauslaß auf und wird auch im geschlossenen Zustand ihres Düsenmundes von Kühlwasser durchflossen und kühlt dadurch die innenliegende Treibstoffdüse, so daß kein Treibstoff verdampfen kann, wenn die Wände 15 der Brennkammern 1, 1' zwar heiß sind, aber gerade kein Explosionstakt durchgeführt wird, sondern die Maschine pausiert. Das Durchströmen von Wasser durch die äußere Wasserdüse der Doppeldüse 16, 16' wird durch die Pumpe 27 bewirkt, welche Wasser aus einem Sammelbehälter 28 fördert. Im Rücklauf der äußeren Wasserdüse der Doppeldüse 16, 16' ist ein elektromagnetisches Ventil 29 vorgesehen. Sobald dieses geschlossen wird, baut sich in der äußeren Wasserdüse der Doppeldüse 16, 16' ein Druck auf und Wasser wird in die Brennkammer 1, 1' eingespritzt. Ist das Ventil 29 geöffnet, gelangt das Wasser über den Sprühkopf 30 und den Luftansaugtrichter 31, deren Funktion weiter unten genauer erläutert wird, zum Sammelbehälter 28 zurück.

Im folgenden wird ein Arbeitszyklus des erfindungsgemäßen Verbrennungsmotors genauer beschrieben:
Wenn ein neuer Arbeitszyklus unmittelbar an einen vorangehenden angeschlossen werden soll und die Maschine mit ihrer höchsten Taktzahl betrieben wird, erfolgt das Einspritzen des Treibstoffes in die mit Frischluft gefüllten Brennkammern 1, 1' zu einem Zeitpunkt, zu dem sich der Kolben 4 in der Aufwärtsbewegung befindet, nach etwa zwei Drittel seines Weges vom unteren Totpunkt UT zum oberen Totpunkt OT. Das Auslaßventil 2 ist zu diesem Zeitpunkt geschlossen. Im Dauerbetrieb erfolgt dabei die Zündung des eingespritzten Treibstoffes unmittelbar durch Selbstzündung an den Wänden 15 der Brennkammern 1, 1', während in der Anlaufphase die Zündkerzen 21, 21' dazu herangezogen werden. Während sich der Kolben 4 weiter aufwärts bewegt, schreitet die Verbrennung in den Brennkammern 1, 1' voran und ist bei oder kurz nach Erreichen des oberen Totpunktes OT des Kolbens 4 vollständig abgeschlossen. In der Folge wird das Auslaßventil 2 geöffnet und das heiße, unter Druck stehende Verbrennungsgas strömt in die Arbeitskammer 3 und treibt dort den Kolben 4 nach unten. Der Kolben 4 leistet dabei Arbeit gegen die weiter unten beschriebene Hydraulik-Pumpeinrichtung 31. Wenn der Kolben 4 den unteren Totpunkt UT erreicht, hat sich das Verbrennungsgas auf etwa Atmosphärendruck entspannt. Zu diesem Zweck ist das Volumen der Arbeitskammer 3 wesentlich größer, vorzugsweise mehr als fünfmal größer als das Volumen der Brennkammern 1, 1'.

Der Explosionstakt ist damit abgeschlossen und in der Folge wird ein Implosionstakt eingeleitet, in welchem die Spülung der Brennkammern 1, 1' und deren Neufüllung und Vorverdichtung erfolgt. Dazu wird die Kühlwasser-Einspritzdüse 26 (wobei bevorzugterweise mehrere solche Einspritzdüsen um den Umfang der Zylinderwand 24 in gleichmäßigen Abständen angeordnet sind, der Einfachheit halber in den Figuren aber nur eine solche Einspritzdüse dargestellt ist) durch Betätigung des elektromagnetischen Ventils 32 ausgelöst. Die Kühlwasser-Einspritzdüse 26 wird dabei aus einem von einer Pumpe 33 beaufschlagten Druckspeicher 34 in Form eines Windkessels gespeist. Die Pumpe 33 bezieht ihr Wasser dabei aus dem bereits erwähnten Sammelbehälter 28. Das Kühlwasser wird unter Hochdruck eingespritzt, wobei der Sprühwinkel möglichst groß ist, um eine möglichst gleichmäßige Besprühung der Arbeitskammer zu gewährleisten (zu diesem Zweck sind bevorzugterweise, wie schon erwähnt, mehrere Kühlwasser-Einspritzdüsen 26 vorgesehen). Der Sprühdüsenwinkel ist jedoch so gewählt, daß weder der Arbeitskolben 4 noch der Zylinderkopf 22 besprüht wird, sondern das Sprühwasser sich auf der gegenüberliegenden Wandung 44 niederschlägt. Durch das Einsprühen des Kühlmediums vermindert sich die Temperatur des heißen Explosionsgases schlagartig und ein Unterdruck bildet sich aus, wobei der Druck in der Arbeitskammer 3 zu Beginn des Implosionstaktes ca. 0,2 bar beträgt. Durch diesen Unterdruck wird der Kolben 4 nach oben in Richtung des oberen Totpunktes OT gezogen. Die dabei auf ihn ausgeübte Kraft wird über Kolbenstangen 35 auf Vorverdichtungspumpen 36, 36' übertragen, die hier als Kolben-Zylinder-Einheiten ausgebildet sind. Bei der Abwärtsbewegung des Kolbens 4 während des Explosionstaktes werden die ersten Zylinderräume 37 der Vorverdichtungspumpen 36, 36' über die als selbstschließende Rückschlagventile ausgebildeten Einlaßventile 38 mit Frischluft beladen, indem die Kolben 39 der Vorverdichtungspumpen 36, 36' vom Kolben 4 der Arbeitskammer 3 nach unten gezogen werden. Bei der Aufwärtsbewegung des Kolbens 4 bzw. der damit verbundenen Kolben 39 im Implosionstakt öffnet das als selbstschließendes Rückschlagventil ausgebildete Auslaßventil 40 und Luft strömt durch die Leitungen 41, 41' in den Brennkammern 1, 1', wodurch in diesen zunächst das Verbrennungsgas ausgespült wird und durch Frischluft ersetzt wird. Wenn der Ladungstausch, der auch durch den Unterdruck in der Arbeitskammer unterstützt wird, abgeschlossen ist, wird das Auslaßventil 2 geschlossen und in der Folge wird ein erhöhter Druck in den Brennkammern 1, 1' aufgebaut. Dieser Druck liegt bevorzugterweise im Bereich zwischen 2 bar und 20 bar und besonders bevorzugt ist der Bereich zwischen 2 bar und 6 bar.

Die Kolben 39 der Vorverdichtungspumpen 36, 36' sind als doppelt wirkende Kolben ausgebildet, so daß sie die Zylinder 42 jeweils in einen ersten Zylinderraum 37, dessen Funktion bereits beschrieben wurde, und einen zweiten Zylinderraum 43 unterteilen. Der zweite Zylinderraum 43 kann über eine Pumpe 44 mit einem mehr oder weniger hohen Druck beaufschlagt werden. Je nach Druckbeaufschlagung des Zylinderraums 43 bildet dieser eine Luftfeder mit einer mehr oder weniger großen Federkonstanten. Diese Luftfeder wird während des Explosionstaktes durch die Abwärtsbewegung des Kolbens 4 gespannt und unterstützt dadurch die Aufwärtsbewegung der Kolben 39 der Vorverdichtungspumpen 36, 36' während des Implosionstaktes. Auf diese Weise ist eine einfache Steuerung der Vorverdichtung möglich. Es muß nämlich gewährleistet sein, daß am Ende eines jeden Implosionstaktes der Kolben 4 gerade seinen oberen Totpunkt erreicht und ebenso die Kolben 39 der Vorverdichtungspumpen 36, 36' ihre oberen Endstellungen erreichen. In diesen Endstellungen darf möglichst keine Luft mehr im Zylinderraum 37 verbleiben, da diese Luft andernfalls ebenfalls als Luftfeder wirken würde und die Kolben 39 und damit den Kolben 4 in unerwünschter Weise sofort wieder nach unten drücken würde. Um ein vollständiges Auspressen der Luft im Zylinderraum 37 zu erreichen, tragen die Kolben 39 weiters elastische Auflagen 45 auf ihren den ersten Zylinderräumen 37 zugewandten Seiten. Zur Abdichtung der Kolbenstangen 35 sind weiters Stopfdichtungen 46 vorgesehen.

Auf seinem Weg vom unteren Totpunkt zum oberen Totpunkt verdichtet der Kolben 4 der Arbeitskammer 3 weiters das in der Arbeitskammer 3 befindliche, unmittelbar nach Beginn des Implosionstaktes zunächst unter Unterdruck stehende Verbrennungsgas. Das elektromagnetische Zuhalteventil 47, welches während des Explosionstaktes geöffnet ist, wodurch das Abgas-Auslaßventil in seiner Schließstellung gehalten wird, kann günstigerweise gleich nach Beginn des Implosionstaktes, sobald sich in der Arbeitskammer 3 ein Unterdruck ausgebildet hat, geöffnet werden. Spätestens wird dieses Zuhalteventil 47 geöffnet, wenn der Kolben 4 das Verbrennungsgas auf seinem Weg vom unteren Totpunkt zum oberen Totpunkt soweit verdichtet hat, daß etwa Atmosphärendruck in der Arbeitskammer vorliegt. Das Abgas-Auslaßventil 48 weist einen ersten elastischen Dichtungsring 49 auf, der um einen Ringspalt 50 zwischen Zylinderwand 24 und Zylinderkopf 22 verläuft und gegen diesen elastisch vorgespannt ist. Ein zweiter elastischer Dichtungsring 51, der den Dichtungsring 49 außen ringförmig umgibt, liegt in einem ringförmigen Hohlraum zwischen nach außen reichenden Fortsetzungen des Zylinderkopfes 22 und der Zylinderwand 24. Dieser ringförmige Hohlraum ist über eine durch den Zylinderkopf 22 tretende Leitung 53 mit dem Zuhalteventil 47 verbunden, welches seinerseits an die Leitung 41 bzw. 41' angeschlossen ist, die in die Brennkammer 1 bzw. 1' mündet und von der Vorverdichtungspumpe 36 bzw. 36' mit Luft beaufschlagt wird. Der Dichtungsring 51 ist in seinem entspannten Zustand vom Dichtungsring 49 abgehoben und liegt im hinteren Bereich des Hohlraumes 52. Die Höhe des Hohlraumes 52 ist größer als die Höhe des Ringspaltes 50. Wenn daher während des Explosionstaktes das Zuhalteventil 47 geöffnet ist und bei geöffnetem Auslaßventil 2 in den Leitungen 41, 41' und in der Arbeitskammer 3 ein etwa gleich großer Druck herrscht, wird der Dichtungsring 51 gestaucht und gegen den innenliegenden Dichtungsring 49 gedrückt, wodurch der Ringspalt 50 verschlossen wird. Es kann daher kein Verbrennungsgas durch den Ringspalt 50 in die Pufferkammer bzw. Sammelkammer 54 für das Auspuffgas austreten. Am Ende des Explosionstaktes vor dem anfänglichen Teil des Implosionstaktes wird das Zuhalteventil 47 geschlossen und der gestauchte Dichtungsring 51 kann sich ausdehnen und unter Abhebung vom Dichtungsring 49 im Hohlraum 52 nach rückwärts verschieben. In dieser Phase des Arbeitszyklus wirkt der Dichtungsring 49 als in Schließrichtung vorgespanntes Rückschlagventil. Sobald der Kolben 4 auf seinem Weg vom unteren Totpunkt zum oberen Totpunkt das in der Arbeitskammer vorhandene Verbrennungsgas auf einen Druck über Atmosphärendruck komprimiert hat, wird der Dichtungsring 49 durch den Druck des komprimierten Verbrennungsgases vom Ringspalt 50 abgehoben und das Abgas-Auslaßventil 48 öffnet sich. Das Abgas-Wasserdampfgemisch wird in die Kammer 54 und weiter durch die Leitung 55 in den Sprühkopf 30 gedrückt, durch den es in den Luftansaugtrichter 77 gesprüht wird. Das Abgas-Wasserdampfgemisch vermischt sich dabei mit Umgebungsluft im Faktor 1 : 50 bis 1 : 100 und wird dabei schlagartig auf ca. 30 °C abgekühlt. Im Abscheider 56 schlägt sich das abgekühlte Wasser nieder. Die Ansaugung der Frischluft erfolgt mittels nachgeschaltetem Saugventilator 57. Das Abgas-Kühlluftgemisch wird über einen Auspuff 58 ausgeschieden, während das abgeschiedene Kühlwasser in den Sammelbehälter 28 rückgeführt wird.

Wenn der Kolben 4 den oberen Totpunkt erreicht hat, ist ein Arbeitszyklus des Verbrennungsmotors abgeschlossen und die Brennkammern 1, 1' sind mit vorkomprimierter Frischluft befüllt. Der nächste Arbeitszyklus des Verbrennungsmotors kann, abhängig vom momentanen Leistungsbedarf, entweder sofort ausgelöst werden, indem Treibstoff in die Brennkammern 1, 1' eingespritzt wird, oder wurde bereits in der letzten Phase der Aufwärtsbewegung des Kolbens durch Einspritzung von Treibstoff eingeleitet oder es wird vor der Auslösung des nächsten Arbeitszyklus eine mehr oder weniger lange Pause eingelegt. Die Steuerung des Schaltventils 17 für die Treibstoffeinspritzung, des Ventils 29 für die Wassereinspritzung in die Brennkammern 1, 1', des Ventils 32 für die Wassereinspritzung in die Arbeitskammer 3, des Zuhalteventils 47 zur Steuerung des Abgas-Auslaßventils 48 und des Brennerauslaß-Steuerventils 59 erfolgt dabei über eine einen Mikroprozessor aufweisende Steuereinheit 60, die Signale von entsprechenden (in der Zeichnung nicht dargestellten) Sensoren auswertet.

Im folgenden werden die den Hydraulikkreis beaufschlagende Hydraulik-Pumpeinrichtung 31 und der hydraulische Antrieb beschrieben:
Die Hydraulik-Pumpeinrichtung 31 weist einen in einem Zylinder 61 gelagerten Tauchkolben 62 auf. Dieser weist einen zylindrischen Hohlraum 63 auf, in den eine mit dem Kolben 4 verbundene Kolbenstange 64 ragt, die als Führung dient. An der Unterseite des Kolbens 4 ist eine Anschlagfläche 76 vorgesehen, welche bei einer Abwärtsbewegung des Kolbens 4 auf einen Ansatz 75 am Tauchkolben 62 trifft und dadurch den Tauchkolben 62 nach unten drückt, wobei von der Hydraulik-Pumpeinrichtung 31 Hydraulikflüssigkeit gefördert wird. Diese Hydraulikflüssigkeit wird über ein Rückschlagventil 65 einem von einer Stahlfeder beaufschlagten Federspeicher 66 und weiter über Ventile 67, 68 den Hydraulikmotoren 69, 70 zugeführt. Die Hydraulikmotoren 69, 70 sind unverstellbar ausgebildet (Konstant-Hydraulikmotoren), d. h., Drehzahl und Drehmoment sind bei gegebenem Durchfluß an Hydraulikflüssigkeit und Druck der Hydraulikflüssigkeit nicht einstellbar. Besonders bevorzugt ist die Verwendung von Schrägscheiben-Kolbenmotoren, die über einen großen Drehzahl- und Drehmomentbereich einen sehr hohen Wirkungsgrad aufweisen, wobei die Hydraulikmotoren 69 und 70 für unterschiedliche Leistungs- und Geschwindigkeitsbereiche vorgesehen sind. Der Federspeicher 66 glättet die bei den einzelnen Pumptakten gebildeten Druckimpulse.

Die aus den Hydraulikmotoren 69, 70 abfließende Hydraulikflüssigkeit wird über die Ventile 67, 68, einen Druckspeicher 71, eine verstellbare Drossel 72, einen Kühler 73 und ein weiteres Rückschlagventil 74 in den Zylinder 61 rückgeführt.

Der Druckspeicher 71 beaufschlagt die Rücklaufleitung mit einem gewissen Druck, um die Hydraulikflüssigkeit während der Aufwärtsbewegung des Kolbens 4 in den Zylinder 61 rückzuführen. Mittels der Drossel 72 wird dabei die Rückflußgeschwindigkeit der Hydraulikflüssigkeit in den Zylinder 61 von der Steuereinheit 60 eingestellt. Je nach eingestellter Rückflußgeschwindigkeit des Hydrauliköls bewegt sich der Tauchkolben 62 mehr oder weniger schnell nach außen. Diese Geschwindigkeit ist nach oben durch die Geschwindigkeit der Aufwärtsbewegung des Kolbens 4 begrenzt. Ist die Geschwindigkeit der Aufwärtsbewegung des Tauchkolbens 62 kleiner als die Geschwindigkeit der Aufwärtsbewegung des Kolbens 4, so hebt sich die Anschlagfläche 76 des Kolbens 4 mehr oder weniger weit vom ringförmigen Ansatz 75 am Tauchkolben 62 ab. Bei einer anschließenden Abwärtsbewegung des Kolbens 4 aufgrund eines ausgelösten Explosionstaktes bewegt sich der Kolben 4 zunächst eine mehr oder weniger weite Strecke nach unten, bis seine Anschlagfläche 76 auf den ringförmigen Ansatz 75 am Tauchkolben 62 trifft. Die Energie des Verbrennungsgases wird über diese Strecke der Abwärtsbewegung des Kolbens zunächst nur in Bewegungsenergie des Kolbens 4 umgesetzt und erst zum Zeitpunkt des Auftreffens der Anschlagfläche 76 auf den Ansatz 75 wird eine Pumpleistung erbracht. Wenn diese Strecke größer ist, ist das Volumen der gepumpten Hydraulikflüssigkeit entsprechend geringer und der Druck entsprechend höher. Auf diese Weise erfolgt die Steuerung des von den Hydraulikmotoren 69, 70 abgegebenen Drehmoments bzw. ihrer Leistung.

Anstelle der im zuvor beschriebenen Ausführungsbeispiel gezeigten Hydraulik-Pumpeinrichtung und des hydraulischen Antriebes könnte der Kolben 4 in einem anderen Ausführungsbeispiel der Erfindung auch in mechanischer Weise eine Welle antreiben, beispielsweise eine Kurbelwelle über eine herkömmliche Pleuelstange.

### Legende

### zu den Hinweisziffern:

- 1, 1': Brennkammer
- 2: Auslaßventil
- 3: Arbeitskammer
- 4: Kolben
- 5: Kolben-Zylinder-Einheit
- 6: Ventilteller
- 7: Ventilschaft
- 8: Zylinder
- 9: Dichtungslippe
- 10: Fortsatz
- 11: Schraubenfeder
- 12: Flansch
- 13: Stopfdichtung
- 14: Wärmeisolierung
- 15: Wand
- 16, 16': Doppeldüse
- 17: Schaltventil
- 18: Druckspeicher
- 19: Treibstoffpumpe
- 20: Tank
- 21, 21': Zündkerze
- 22: Zylinderkopf
- 23: Isolierung
- 24: Zylinderwand
- 25: Kolbendichtung
- 26: Kühlwasser-Einspritzdüse
- 27: Pumpe
- 28: Sammelbehälter
- 29: Ventil
- 30: Sprühkopf
- 31: Hydraulik-Pumpeinrichtung
- 32: Ventil
- 33: Pumpe
- 34: Druckspeicher
- 35: Kolbenstange
- 36, 36': Vorverdichtungspumpen
- 37: Zylinderraum
- 38: Einlaßventil
- 39: Kolben
- 40: Auslaßventil
- 41, 41': Leitung
- 42: Zylinder
- 43: Zylinderraum
- 44: Pumpe
- 45: elastische Auflage
- 46: Stopfdichtung
- 47: Zuhalteventil
- 48: Abgas-Auslaßventil
- 49: Dichtungsring
- 50: Ringspalt
- 51: Dichtungsring
- 52: Hohlraum
- 53: Leitung
- 54: Sammelkammer
- 55: Leitung
- 56: Abscheider
- 57: Saugventilator
- 58: Auspuff
- 59: Brennerauslaß-Steuerventil
- 60: Steuereinheit
- 61: Zylinder
- 62: Tauchkolben
- 63: Hohlraum
- 64: Kolbenstange
- 65: Rückschlagventil
- 66: Federspeicher
- 67: Ventil
- 68: Ventil
- 69: Hydraulikmotor
- 70: Hydraulikmotor
- 71: Druckspeicher
- 72: Drossel
- 73: Kühler
- 74: Rückschlagventil
- 75: Ansatz
- 76: Anschlagfläche
- 77: Luftansaugtrichter

## Patentansprüche

1. Verbrennungsmotor mit einer oder mehreren Brennkammern (1, 1') zur Verbrennung eines Treibstoffes in getakteten Explosionen unter Bildung eines unter Druck stehenden Verbrennungsgases, wobei die Brennkammern (1, 1') mit mindestens einer von den Brennkammern (1, 1') gesonderten Arbeitskammer (3) verbunden sind, welche einen Kolben (4) zur Umsetzung der Energie des in einem Explosionstakt gebildeten Verbrennungsgases in mechanische Energie bzw. Arbeit aufweist, dadurch gekennzeichnet, daß zumindest eine in die Arbeitskammer (3) mündende Einspritzdüse (26) zum Einsprühen einer Kühlflüssigkeit zur Einleitung eines an den Explosionstakt anschließenden Implosionstaktes vorgesehen ist und daß eine oder mehrere durch die Bewegung des Kolbens (4) während des Implosionstaktes angetriebene Vorverdichtungspumpen (36, 36') zum Verdichten von in die Brennkammern (1, 1') einzubringender Luft vorgesehen sind.

2. Verbrennungsmotor nach Anspruch 1, dadurch gekennzeichnet, daß die Vorverdichtungspumpen (36, 36') jeweils einen in einem Zylinder (42) gelagerten Kolben (39) aufweisen, dessen Kolbenstange (35) am Kolben (4) der Arbeitskammer (3) oder an einem damit verbundenen Teil angreift.

3. Verbrennungsmotor nach Anspruch 1 oder Anspruch 2, dadurch gekennzeichnet, daß die Kolben (39) der Vorverdichtungspumpen (36, 36') als doppelt wirkende Kolben (39) ausgebildet sind, die die Zylinder (42) der Vorverdichtungspumpen (36, 36') in erste und zweite Zylinderräume (37, 43) unterteilen, wobei jeweils der erste Zylinderraum (37) mit den Brennkammern (1, 1') bzw. einer der Brennkammern (1, 1') in Verbindung steht und in den zweiten, als Luftfeder wirkenden Zylinderraum (43) eine Druckluftleitung zum Aufbauen eines mehr oder weniger hohen Luftdruckes im zweiten Zylinderraum (43) führt.

4. Verbrennungsmotor nach Anspruch 3, dadurch gekennzeichnet, daß die Kolben (39) der Vorverdichtungspumpen (36, 36') jeweils auf der Seite des ersten Zylinderraumes (37) eine elastische Auflage (45) zum vollständigen Auspressen der Luft im ersten Zylinderraum (37) aufweisen.

5. Verbrennungsmotor nach einem der Ansprüche 1 bis 4, dadurch gekennzeichnet, daß zwischen den Brennkammern (1, 1') und der Arbeitskammer (3) ein steuerbares Auslaßventil (2) vorgesehen ist, welches vorzugsweise einen in einen Zylinder (8) sich erstreckenden Ventilschaft (7) aufweist, an dem eine ringförmige Dichtungslippe (9) angeordnet ist, die im geschlossenen Zustand des Auslaßventils (2) an einem ringförmigen Fortsatz (10) an der Innenseite der Wandung des Zylinders (8) anliegt, wobei der Zylinder (8) in zwei Zylinderräume unterteilt wird, welche jeweils einen hydraulischen Anschluß (VII, VIII) aufweisen.

6. Verbrennungsmotor nach einem der Ansprüche 1 bis 5, dadurch gekennzeichnet, daß das Volumen der Arbeitskammer (3) wesentlich größer, vorzugsweise mehr als fünfmal größer als das Volumen der in diese Arbeitskammer (3) mündenden Brennkammern (1, 1') ist.

7. Verbrennungsmotor nach einem der Ansprüche 1 bis 6, dadurch gekennzeichnet, daß eine Einspritzeinrichtung (16, 16', 27, 28, 29) zur Einspritzung von Wasser in die Brennkammern (1, 1') im Explosionstakt vorgesehen ist.

8. Verbrennungsmotor nach einem der Ansprüche 1 bis 7, dadurch gekennzeichnet, daß die Brennkammern (1, 1') ein konstantes Volumen aufweisen.

9. Verbrennungsmotor nach einem der Ansprüche 1 bis 8, dadurch gekennzeichnet, daß der Kolben (4) der Arbeitskammer (3) eine hydraulische Pumpeinrichtung (31) antreibt.

10. Verfahren zum Betreiben einer Verbrennungskraftmaschine, bei der in einer oder mehreren Brennkammern ein Treibstoff in getakteten Explosionen verbrannt wird und das im Explosionstakt gebildete Verbrennungsgas aus den Brennkammern (1, 1') in eine von den Brennkammern (1, 1') gesonderte Arbeitskammer (3), welche ein veränderliches Volumen aufweist, strömen gelassen wird, in der das Verbrennungsgas mechanische Arbeit durch Verschiebung eines Kolbens (4) leistet, dadurch gekennzeichnet, daß anschließend an den Explosionstakt zur Initialisierung eines Implosionstaktes der Druck des Verbrennungsgases in der Arbeitskammer (3) durch Einsprühen einer Kühlflüssigkeit in die Arbeitskammer (3) auf einen unter Atmosphärendruck liegenden Druck verringert wird, wobei von der durch diesen Unterdruck bewirkten bzw. unterstützten Verschiebung des Kolbens (4) der Arbeitskammer (3) eine oder mehrere Vorverdichtungspumpen (36, 36') zum Verdichten von in die Brennkammern einzubringender Luft angetrieben werden.

11. Verfahren nach Anspruch 10, dadurch gekennzeichnet, daß der Druck des Verbrennungsgases in der Arbeitskammer (3) vor Einsprühen der Kühlflüssigkeit bei etwa Atmosphärendruck liegt.

12. Verfahren nach Anspruch 10 oder 11, dadurch gekennzeichnet, daß der Treibstoff bei einem konstanten Volumen der Brennkammern (1, 1') verbrannt wird.

13. Verfahren nach einem der Ansprüche 10 bis 12, dadurch gekennzeichnet, daß der Druck der Verbrennungsluft in den Brennkammern (1, 1') vor der Einspritzung des Treibstoffes im Bereich zwischen 2 bar und 20 bar, vorzugsweise zwischen 2 bar und 6 bar liegt.

14. Verfahren nach einem der Ansprüche 10 bis 13, dadurch gekennzeichnet, daß während des Explosionstaktes ein die Brennkammern (1, 1') mit der Arbeitskammer (3) verbindendes Auslaßventil (2) geschlossen ist.

15. Verfahren nach einem der Ansprüche 10 bis 14, dadurch gekennzeichnet, daß zur Senkung des NOx-Ausstoßes während des Explosionstaktes Wasser in die Brennkammern (1, 1') eingespritzt wird.
